# EUROPEAN PATENT SPECIFICATION

(11) **EP 3 896 931 B1**
(45) Date of publication and mention of the grant of the patent: **17.04.2024**
(21) Application number: 19894409.2
(22) Date of filing: 06.12.2019
(51) Int. Cl.: G06F 7/544, G06F 15/173, H04L 1/00

(54) **SPARK SHUFFLE-BASED REMOTE DIRECT MEMORY ACCESS SYSTEM AND METHOD**
AUF SPARK-SHUFFLE BASIERENDES SYSTEM UND VERFAHREN FÜR REMOTE-DIREKTSPEICHERZUGRIFF
SYSTÈME ET PROCÉDÉ D'ACCÈS DIRECT À LA MÉMOIRE À DISTANCE PAR « SPARK SHUFFLE »

(30) Priority: 10.12.2018 CN 201811501978
(43) Date of publication of application: 20.10.2021
(73) Proprietor: The People's Bank of China National Clearing Center, Beijing 100048 (CN)
(72) Inventor: FANG, Fang, Beijing 100048 (CN); MA, Xuejun, Beijing 100048 (CN); ZHANG, Jian, Beijing 100048 (CN); NA, Yong, Beijing 100048 (CN); ZENG, Yuwei, Beijing 100048 (CN)
(74) Representative: EIP
(86) International application number: PCT/CN2019/123754
(87) International publication number: WO 2020/119608

(56) References cited:
- CN-A- 103 227 778
- CN-A- 105 630 426
- CN-A- 109 861 967
- US-A1- 2007 074 092
- US-A1- 2010 030 910
- US-A1- 2017 277 655
- LIU BING ET AL: "Accelerating Spark Shuffle with RDMA", 2018 IEEE INTERNATIONAL CONFERENCE ON NETWORKING, ARCHITECTURE AND STORAGE (NAS), IEEE, 11 October 2018 (2018-10-11), pages 1-7, XP033434189, DOI: 10.1109/NAS.2018.8515724 [retrieved on 2018-10-30]

## Description

### Technical Field

The present invention relates to the technical field of remote direct memory access, and more particularly, to a system and a method for remote direct memory access based on Spark Shuffle.

### Background

In the Map Reduce framework, Shuffle is a bridge connecting between Map and Reduce, and to read the output of Map, Reduce must go through Shuffle; while Reduce and Map processes are usually not in the same node, this means that the Shuffle phase typically requires read and write operations across networks and some disks, and thus the performance of Shuffle directly affects the performance and throughput of the overall program.

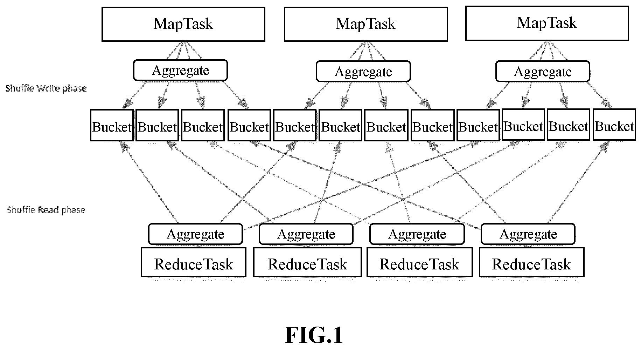

Like the Map Reduce computing framework, the Spark operation also has Shuffle stages, which are usually divided into stages by Shuffle, and the data interaction between the Stages is done by the Shuffle. The overall process is shown in FIG. 1. The Shuffle operation consumes CPU, RAM, disk, and network resources very much regardless of Map Reduce or Spark operations; it is necessary to avoid the Shuffle operation as much as possible.

US2010/030910 discloses a method for processing data that includes performing by one or more processors and/or circuits on a chip that handles a plurality of networking protocols, receiving data for one or more network connections corresponding to one or more of the plurality of networking protocols. The chip may be configured for handling the received data based on whether the one or more of the plurality of networking protocols associated with the received data includes transmission control protocol and/or remote direct memory access protocol. The received data may be processed based on the configuration. At least one RDMA marker may be removed from the received data when the received data includes the RDMA protocol, and/or the received data is processed based on a transmission control protocol session identification within the received data.

### Summary of the Invention

In order to solve the problems of excessive consumption and low data flux and the like of the Shuffle stage in the current Spark, the main purpose of the embodiment of the invention is to provide a system for remote direct memory access based on Spark Shuffle. The system comprises a transmitting end and a receiving end;
the transmitting end comprises a transmitter, a transmitting channel and a transmitting manager; the transmitter stores acquired transmission data into the transmitting channel, and invokes the transmitting manager; after being invoked, the transmitting manager generates checking information based on the transmission data and stores the checking information into the transmitting channel;
the receiving end comprises a receiver, a receiving channel and a receiving manager; the receiver acquires the transmission data and the checking information in the transmitting channel through a remote direct memory access technique, stores the transmission data and the checking information into the receiving channel, and invokes the receiving manager; after being invoked, the receiving manager verifies the transmission data based on the checking information;
wherein the transmitting end further comprises a register for registering a transmission task in a format supporting remote direct memory access, wherein, the transmission data is stored in the transmission task;
wherein the transmitting manager is further configured to check the status of the transmitter and the transmitting channel, and to feedback a transmitting status alert to the transmitter, so that the transmitter acquires the transmission data through the transmission task based on the transmitting status alert;
wherein the system further comprises an etl processing module for preprocessing the transmission data in shuffle stage.

Optionally, in an embodiment of the present invention, the receiving end further comprises a listener for listening to the receiving channel, and transmitting a reception alert to the receiver when it is listened that the transmission data enters the receiving channel, to cause the receiver to invoke the receiving manager in accordance with the reception alert.

Optionally, in an embodiment of the present invention, the receiving manager is further configured to check a status of the receiver and the receiving channel, and to feed back a receiving status alert to the receiver, the receiver acquires the transmission data through the transmitting channel based on the receiving status alert.

The checking information includes data details and summary information; after being invoked, the receiving manager checks the transmission data based on the checking information, which further includes: the receiving manager checks details of the transmission data based on the data details, and checks the total number of the transmission data based on the summary information.

The receiving manager is further configured to transmit a verification result to the receiver after verifying the transmission data.

The verification result includes that the verification passed or the verification failed; when the verification result is that the verification failed, the receiver transmits a transmission failure alert to the transmitter.

An embodiment of the present invention further provides a method for remote direct memory access based on Spark Shuffle, wherein comprising:
storing transmission data acquired from a transmitter, generating checking information based on the transmission data and storing the checking information, wherein the checking information includes data details and summary information;
acquiring the transmission data and the checking information through a remote direct memory access technique, storing the transmission data and the checking information, and verifying the transmission data based on the checking information;
wherein the method further comprises: checking a status of the transmitter and a transmitting channel, and to feedback a transmitting status alert to the transmitter, the transmitter acquires the transmission data through a transmission task based on the transmitting status alert
wherein the method further comprises preprocessing the transmission data in a shuffle stage using an etl processing module;
checking the transmission data based on the checking information, which further includes: checking details of the transmission data based on the data details, and checking the total number of the transmission data based on the summary information;
wherein the method further comprises: transmitting a verification result to a receiver after verifying the transmission data,
wherein the verification result includes that the verification passed or the verification failed; when the verification result is that the verification failed, using the receiver to transmit a transmission failure alert to the transmitter.

An embodiment of the present invention further provides an electronic device, including a memory, a processor, and a computer program stored in the memory and executable on the processor, wherein the processor, when executing the program, implements the steps of the method for remote direct memory access based on Spark Shuffle.

The embodiment of the present invention further provides a computer readable storage medium which stores a computer program which, when being executed by a processor, implements the steps of the method for remote direct memory access based on Spark Shuffle.

With the system for remote direct memory access in the present invention, the access control at the operating system level is bypassed, and the remote computer memory data is directly accessed, so that the data flux between nodes is greatly improved, and the completion time of data processing is shortened.

### Brief Description of the Drawings

In order to more clearly explain the technical solution in the embodiments of the invention or in the prior art, drawings that need to be used in description of the embodiments will be simply introduced below, obviously the drawings in the following description are merely some examples of the invention, for persons ordinarily skilled in the art, it is also possible to obtain other drawings according to these drawings without making creative efforts.
FIG. 1 is a schematic flow diagram of the Shuffle stage;
FIG. 2 is a schematic diagram of TCP Socket and RDMA data transmission;
FIG. 3 is a schematic structural diagram of a system for remote direct memory access based on Spark Shuffle according to an embodiment of the present invention;
FIG. 4 is a schematic structural diagram of an electronic device according to an embodiment of the present application.

### Detailed Description of the Preferred Embodiments

Hereinafter the technical solution in the embodiments of the present invention will be described clearly and integrally in combination with the accompanying drawings in the embodiments of the present invention.

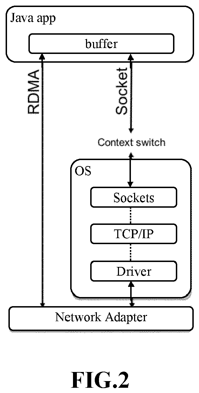

The traditional TCP Socket data transmission needs to go through many steps: the data is firstly copied from a source application to Sockets buffer of the current host, then copied to the Transport Protocol Driver, and then to the NIC Driver, and finally, the NIC transmits the data to the NIC of the target host via the network, and the target host transmits the data through the above steps to the application, and the entire process is shown in FIG. 2. A large part of time for transmission of network data is devoted to the copying of the data. If the data that needs to be transmitted is large, then this phase is likely to take up a significant portion of the total job run time. RDMA (Remote Direct Memory Access) technology can directly omit different layers of data copy, so that the target host can directly obtain the data from the source host memory. The RDMA technology is an abbreviation of Remote Direct Memory Access, which is a kind of direct memory access technology, which transfers data directly from the memory of one computer to another computer without intervention of both operating systems. This allows for high throughput, low latency network communications, particularly suitable for use in large scale parallel computer clusters. RDMA has the following features: Zero-copy, Direct hardware interface, IO bypassing the kernel and TCP/IP, sub-microsecond latency, Flow control and reliability is offloaded in hardware.

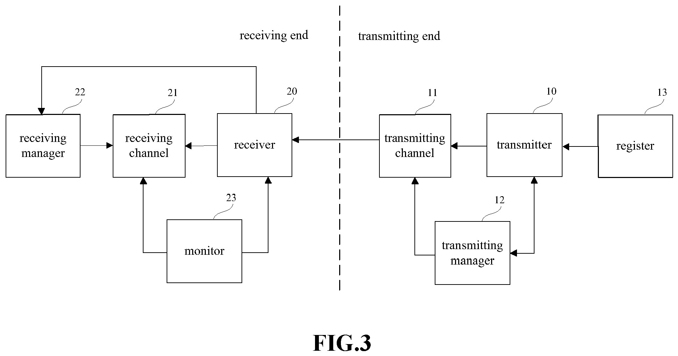

As shown, FIG. 3 is a schematic structural diagram of a system for remote direct memory access based on Spark Shuffle according to an embodiment of the present invention, the system shown in FIG. 3 comprises: a transmitting end and a receiving end;
the transmitting end comprises a transmitter 10, a transmitting channel 11 and a transmitting manager 12; the transmitter 10 stores the acquired transmission data into the transmitting channel 11, and invokes the transmitting manager 12; after being invoked, the transmitting manager 12 generates checking information based on the transmission data and stores the checking information into the transmitting channel 11;
the receiving end comprises a receiver 20, a receiving channel 21 and a receiving manager 22; the receiver 20 acquires the transmission data and the checking information in the transmitting channel 11 through a remote direct memory access technique, stores the transmission data and the checking information into the receiving channel 21, and invokes the receiving manager 22; after being invoked, the receiving manager 22 verifies the transmission data based on the checking information.

In this embodiment, the transmitter 10 places the transmission data to be transmitted in a queue in the transmitting channel 11, and invokes the transmitting manager 12. The transmitting manager 12 generates checking information based on the transmission data, and the checking information may specifically include information such as the total number of pieces of data and the type of data and the like. The transmitting manager 12 transmits the checking information to the transmitting channel 11. The receiver 20 at the receiving end acquires the transmission data and the checking information in the transmitting channel 11 from the transmitting channel 11 using a remote direct memory access technique (RDMA). The receiver 20 places the received transmission data and checking information in the queue of the receiving channel 21, and invokes the receiving manager 22 to check the transmission data. Specifically, the receiving manager 22 checks the transmission data based on the content recorded in the checking information. For example, the total number of pieces of the transmission data and the type of the transmission data , etc. are checked.

Where the transmitting manager 12 and the receiving manager 22 are responsible for managing and tracking the states of the transmitter 10, the transmitting channel 11, the receiver 20, and the receiving channel 21, and are responsible for maintaining channel start-stop operations. At the same time, an etl processing module is provided, which can realize the preprocessing of data stored in the buffer in shuffle stage, including the capabilities such as data checking and the like. The transmitter 10 is responsible for receiving buffer data of the sparkmap task, and transmitting the buffer data to the opposite end through the transmitting channel 11. The receiver 20 is responsible for processing the received data in the receiving channel 21. The transmitting channel 11 and the receiving channel 21 are responsible for creating a stack queue and storing the transmitting data and the receiving data.

As an embodiment of the present invention, the transmitting end further comprises a register 13 for registering a transmission task in a format supporting remote direct memory access, wherein, the transmission data is stored in the transmission task.

In an embodiment of the present invention, the transmitting manager 12 is further configured to check the status of the transmitter and the transmitting channel, and to feed back a transmitting status alert to the transmitter, so that the transmitter acquires the transmission data through the transmission task based on the transmitting status alert.

Where the processing of the transmitting data is that the transmitting manager 12 of RdmaShuffle checks whether the transmitter 10 and the transmitting channel 11 are in a normal state, and invokes the registrar to check whether the transmission job is registered in a format that supports remote direct memory access (RdmaShuffle). When transmitting data, the transmitter 10 invokes the transmitting manager 12, receives the buffer data of the sparkmap task (that is, the transmission data) by the transmitter 10, stores the data in the transmitting channel 11, and transmits the data to the peer network card through the DiSNIAPI.

As an embodiment of the present invention, the receiving end further comprises a listener 23 for listening to the receiving channel 21, and transmitting a reception alert to the receiver 20 when it is listened that the transmission data enters the receiving channel 21, to cause the receiver 20 to invoke the receiving manager 22 in accordance with the reception alert.

In the present embodiment, the listener 23 listens for the arrival of data on the receiving channel 21 and initiates the receiver 20 to process the data on the receiving channel 21, the receiver 20 invokes the receiving manager 22 for an etl data check, for example, if the data check fails, a processing error result will be returned.

As an embodiment of the present invention, the receiving manager 22 is further configured to check the status of the receiver 20 and the receiving channel 21, and to feedback a receiving status alert to the receiver 20, so that the receiver 20 acquires the transmission data through the transmitting channel 11 based on the receiving status alert.

As an embodiment of the present invention, the checking information includes data details and summary information; after being invoked, the receiving manager 22 checks the transmission data based on the checking information, which further includes: the receiving manager 22 checks the details of the transmission data based on the data details, and checks the total number of the transmission data based on the summary information. Where the checking information of the transmission data includes the data details, which may include information such as the data type, and the summary information includes the total number of data, for example, the total number of pieces of data.

As an embodiment of the present invention, the receiving manager 22 is further configured to transmit a verification result to the receiver after verifying the transmission data.

As an embodiment of the present invention, the verification result includes that the verification passed or the verification failed; when the verification result is that the verification failed, the receiver 20 transmits a transmission failure alert to the transmitter 10. Where the transmission failure alert transmitted by the receiver 20 to the transmitter 10 may include the type of error that occurs, and etc.

With the system for remote direct memory access in the present invention, the access control at the operating system level is bypassed, and the remote computer memory data is directly accessed, so that the data flux between nodes is greatly improved, and the completion time of data processing is shortened.

An embodiment of the present invention further provides a method for remote direct memory access based on Spark Shuffle, the method comprises:
storing the acquired transmission data, generating checking information based on the transmission data and storing the checking information;
acquiring the transmission data and the checking information through a remote direct memory access technique, storing the transmission data and the checking information, and verifying the transmission data based on the checking information.

Based on the same application concept as the above described system for remote direct memory access based on Spark Shuffle, the present invention further provides a method for remote direct memory access based on Spark Shuffle as described above. Because the method for remote direct memory access based on Spark Shuffle solves the problem by a principle similar to that of a system for remote direct memory access based on Spark Shuffle, therefore, the implementation of the method for remote direct memory access based on Spark Shuffle may refer to implementation of the system for remote direct memory access based on Spark Shuffle, and the repetition will not be repeated.

With the method for remote direct memory access in the present invention, the access control at the operating system level is bypassed, and the remote computer memory data is directly accessed, so that the data flux between nodes is greatly improved, and the completion time of data processing is shortened.

An embodiment of the present invention further provides an electronic device, including a memory, a processor, and a computer program stored on the memory and executable on the processor, wherein the processor, when executing the program, implements the steps of the method for remote direct memory access based on Spark Shuffle. The electronic device specifically includes the following contents:
a processor, a memory, a communications interface, and a bus; the processor, the memory, and the communications interface complete communication with each other through the bus; the communications interface is used for implementing information transmission between related devices; the electronic device may be a desktop computer, a tablet computer, or a mobile terminal or the like, and the present embodiment is not limited thereto. In the present embodiment, the electronic device may be implemented with reference to the embodiment of the method for remote direct memory access based on Spark Shuffle and the embodiment of the system for remote direct memory access based on Spark Shuffle, the contents thereof are incorporated herein and will not be repeated.

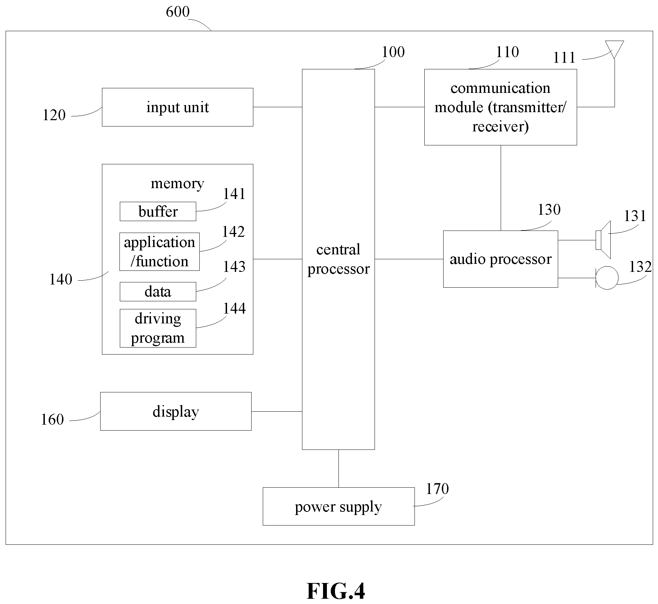

FIG. 4 is a schematic block diagram of system configuration of an electronic device 600 according to an embodiment of the present application. As shown in FIG. 4, the electronic device 600 may include a central processor 100 and a memory 140; the memory 140 is coupled to the central processor 100. It is worth noting that this figure is exemplary; other types of structures may also be used in addition to or instead of the structure to implement telecommunications functions or other functions.

As shown in FIG. 4, the electronic device 600 may further include a communication module 110, an input unit 120, an audio processor 130, a display 160, and a power supply 170. It is worth noting that the electronic device 600 is not necessarily required to include all of the components shown in FIG. 4; in addition, the electronic device 600 may further include components not shown in FIG. 4, with reference to the prior art.

As shown in FIG. 4, the central processor 100, sometimes referred to as a controller or an operational control, may include a microprocessor or other processor apparatuses and/or logic apparatuses, the central processor 100 receives inputs and controls operation of the components of the electronic device 600.

Where, the memory 140 may be, for example, one or more of a buffer, a flash memory, a hard drive, a removable medium, a volatile memory, a non-volatile memory, or other suitable apparatuses. The above-described failure-related information may be stored, and in addition, a program for executing the relevant information may be stored. And the central processor 100 may execute the program stored in the memory 140 to implement information storage or processing and the like.

The input unit 120 provides an input to the central processor 100. The input unit 120 is, for example, a key or a touch input apparatus. The power supply 170 is used to provide electric power to the electronic device 600. The display 160 is used for displaying objects to be displayed, such as images and text, and the like. The display may be, for example, an LCD display, but is not limited thereto.

The memory 140 may be a solid state memory such as read only memory (ROM), random access memory (RAM), SIM card, or the like. The memory may also be such a memory that it saves information even when power is off, on which data can be selectively erased and more data is set, and an example of which is sometimes referred to as an EPROM or the like. The memory 140 may also be some other types of apparatuses. The memory 140 includes a buffer memory 141 (sometimes referred to as a buffer). The memory 140 may include an application/function storage unit 142 for storing application programs and function programs or a flow for performing operation of an electronic device 600 by the central processor 100.

The memory 140 may also include a data storage unit 143 for storing data. A drive program storage unit 144 of the memory 140 may include various drive programs of the electronic device for communication functions and/or for executing other functions of the electronic device, such as a messaging application, an address book application, and the like.

The communication module 110 is a transmitter/receiver 110 that transmits and receives signals via an antenna 111. The communication module (transmitter/receiver) 110 is coupled to the central processor 100 to provide input signals and to receive output signals, which may be the same as in the case of conventional mobile communication terminals.

Based on different communication technologies, a plurality of communication modules 110, such as a cellular network module, a Bluetooth module, and/or a wireless local area network module and the like may be provided in the same electronic device. The communication module (transmitter/receiver) 110 is also coupled to a speaker 131 and a microphone 132 via an audio processor 130 to provide an audio output via the speaker 131, and to receive an audio input from the microphone 132, thereby implementing the usual telecommunications functions. The audio processor 130 may include any suitable buffer, decoder, amplifier, or the like. In addition, the audio processor is also coupled to the central processor 100 so that sound can be recorded on the local machine by the microphone 132, and the sound stored on the local machine can be played through the speaker 131.

The embodiment of the present invention further provides a computer readable storage medium which stores a computer program which, when being executed by a processor, implements the steps of the method for remote direct memory access based on Spark Shuffle.

Based on the same application concept as the above described system for remote direct memory access based on Spark Shuffle, the present invention further provides an electronic device and a computer readable storage medium as described above. Because the electronic device and the computer readable storage medium solve the problem by a principle similar to that of a system for remote direct memory access based on Spark Shuffle, therefore, the implementation of the electronic device and the computer readable storage medium may refer to implementation of the system for remote direct memory access based on Spark Shuffle, and the repetition will not be repeated.

With the electronic device and the computer readable storage medium in the present invention, the access control at the operating system level is bypassed, and the remote computer memory data is directly accessed, so that the data flux between nodes is greatly improved, and the completion time of data processing is shortened.

Those of ordinary skill in the art will appreciate that all or a portion of the steps in the method of implementing the embodiments described above may be accomplished by instructing related hardware in a program that may be stored in a computer readable storage medium, such as ROM/RAM, diskette, optical disc, and etc.

The purpose, technical solution and beneficial effect of the invention have been further described in detail in the above specific embodiments, it should be understood that the above contents are merely specific embodiments of the invention and are not for limiting protection scope of the invention, and any modifications, equivalent replacements, improvements and the like within the principle of the present invention shall be included within the protection scope of the present invention.

## Claims

1. A system for remote direct memory access based on Spark Shuffle, wherein the system comprises a transmitting end and a receiving end;
the transmitting end comprises a transmitter (10), a transmitting channel (11) and a transmitting manager (12); the transmitter (10) stores acquired transmission data into the transmitting channel (11), and invokes the transmitting manager (12); after being invoked, the transmitting manager (12) generates checking information based on the transmission data and stores the checking information into the transmitting channel (11), wherein the checking information includes data details and summary information;
the receiving end comprises a receiver (20), a receiving channel (21) and a receiving manager (22); the receiver (20) acquires the transmission data and the checking information in the transmitting channel (11) through a remote direct memory access technique, stores the transmission data and the checking information into the receiving channel (21), and invokes the receiving manager (22); after being invoked, the receiving manager (22) verifies the transmission data based on the checking information;
wherein the transmitting end further comprises a register (13) for registering a transmission task in a format supporting remote direct memory access, wherein the transmission data is stored in the transmission task;
wherein the transmitting manager (12) is further configured to check whether the status of the transmitter (10) and the transmitting channel (11) are in a normal state and to feedback a transmitting status alert to the transmitter (10), so that the transmitter (10) acquires the transmission data through the transmission task based on the transmitting status alert;
wherein the system further comprises an etl processing module for preprocessing the transmission data in a shuffle stage of the Spark Shuffle;
after being invoked, the receiving manager (22) checks the transmission data based on the checking information, which further includes: the receiving manager (22) checks details of the transmission data based on the data details, and checks the total number of the transmission data based on the summary information;
wherein the receiving manager (22) is further configured to transmit a verification result to the receiver (20) after verifying the transmission data,
wherein the verification result includes that the verification passed or the verification failed; when the verification result is that the verification failed, the receiver (20) transmits a transmission failure alert to the transmitter (10).

2. The system according to claim 1, wherein the receiving end further comprises a listener (23) for listening to the receiving channel (21), and transmitting a reception alert to the receiver (20) when it is listened that the transmission data enters the receiving channel (21), to cause the receiver (20) to invoke the receiving manager (22) in accordance with the reception alert.

3. The system according to claim 1, wherein the receiving manager (22) is further configured to check a status of the receiver (20) and the receiving channel (21), and to feed back a receiving status alert to the receiver (20), the receiver (20) acquires the transmission data through the transmitting channel (11) based on the receiving status alert.

4. A method for remote direct memory access based on Spark Shuffle, comprising a transmitting end and a receiving end, wherein the transmitting end comprises a transmitter (10), a transmitting channel (11) and a transmitting manager (12), wherein the receiving end comprises a receiver (20), a receiving channel (21) and a receiving manager (22), wherein the method further comprises:
storing, in the transmitting channel (11), transmission data acquired from the transmitter (10), generating, by the transmitting manager (12), checking information based on the transmission data and storing, in the transmitting channel (11), the checking information, wherein the checking information includes data details and summary information;
acquiring, by the receiver (20), the transmission data and the checking information through a remote direct memory access technique, storing the transmission data and the checking information in the receiving channel (21), and verifying, by the receiving manager (22), the transmission data based on the checking information;
wherein the method further comprises: checking, by the transmitting manager (12), whether the status of the transmitter (10) and the transmitting channel (11) are in a normal state and to feedback a transmitting status alert to the transmitter (10), the transmitter (10) acquires the transmission data through a transmission task based on the transmitting status alert;
wherein the method further comprises preprocessing the transmission data in a shuffle stage of the Spark Shuffle using an etl processing module;
checking, by the receiving manager (22), the transmission data based on the checking information, which further includes checking details of the transmission data based on the data details, and checking the total number of the transmission data based on the summary information;
wherein the method further comprises: transmitting, by the receiving manager (22), a verification result to the receiver (20) after verifying the transmission data,
wherein the verification result includes that the verification passed or the verification failed; when the verification result is that the verification failed, using the receiver (20) to transmit a transmission failure alert to the transmitter (10).

5. An electronic device (600), comprising a memory (140), a processor (100), and a computer program stored in the memory (140) and executable on the processor (100), the processor (100), when executing the program, implements the steps of the transmitting end of the method for remote direct memory access based on Spark Shuffle according to claim 4.

6. A computer readable storage medium which stores a computer program, wherein when being executed by a processor, the computer program implements the steps of the transmitting end of the method for remote direct memory access based on Spark Shuffle according to claim 4.

## Patentansprüche

1. System für Remote-Direktspeicherzugriff basierend auf Spark-Shuffle, wobei das System ein Sendeende und ein Empfangsende umfasst;
das Sendeende umfasst einen Sender (10), einen Sendekanal (11) und einen Sendemanager (12); der Sender (10) speichert erfasste Sendedaten in dem Sendekanal (11) und ruft den Sendemanager (12) auf; der Sendemanager (12) erzeugt nach dem Aufrufen Prüfinformationen basierend auf den Sendedaten und speichert die Prüfinformationen in dem Sendekanal (11), wobei die Prüfinformationen Datendetails und Zusammenfassungsinformationen enthalten;
das Empfangsende umfasst einen Empfänger (20), einen Empfangskanal (21) und einen Empfangsmanager (22); der Empfänger (20) erfasst die Sendedaten und die Prüfinformationen in dem Sendekanal (11) durch eine Remote-Direktspeicherzugriffstechnik, speichert die Sendedaten und die Prüfinformationen in dem Empfangskanal (21) und ruft den Empfangsmanager (22) auf; nach dem Aufrufen verifiziert der Empfangsmanager (22) die Sendedaten basierend auf den Prüfinformationen;
wobei das Sendeende ferner ein Register (13) zum Registrieren einer Sendeaufgabe in einem Format umfasst, das Remote-Direktspeicherzugriff unterstützt, wobei die Sendedaten in der Sendeaufgabe gespeichert werden;
wobei der Sendemanager (12) ferner konfiguriert ist, um zu überprüfen, ob sich der Status des Senders (10) und des Sendekanals (11) in einem Normalzustand befinden und um eine Sendestatuswarnung an den Sender (10) zu melden, sodass der Sender (10) die Sendedaten durch die Sendeaufgabe basierend auf der Sendestatuswarnung erfasst;
wobei das System ferner ein ETL-Verarbeitungsmodul zum Vorverarbeiten der Sendedaten in einer Shuffle-Stufe des Spark-Shuffle umfasst;
nach dem Aufrufen prüft der Empfangsmanager (22) die Sendedaten basierend auf den Prüfinformationen, was ferner einschließt: der Empfangsmanager (22) prüft Details der Sendedaten basierend auf den Datendetails, und prüft die Gesamtzahl der Sendedaten basierend auf der Zusammenfassungsinformation;
wobei der Empfangsmanager (22) ferner konfiguriert ist, um ein Verifizierungsergebnis an den Empfänger (20) zu senden, nachdem er die Sendedaten verifiziert hat,
wobei das Verifizierungsergebnis einschließt, dass die Verifizierung bestanden ist oder die Verifizierung fehlgeschlagen ist; wenn das Verifizierungsergebnis ist, dass die Verifizierung fehlgeschlagen ist, sendet der Empfänger (20) eine Sendefehlerwarnung an den Sender (10).

2. System nach Anspruch 1, wobei das Empfangsende ferner einen Hörer (23) zum Abhören des Empfangskanals (21) und zum Senden einer Empfangswarnung an den Empfänger (20) umfasst, wenn gehört wird, dass die Sendedaten in den Empfangskanal (21) eintreten, um den Empfänger (20) zu veranlassen, den Empfangsmanager (22) entsprechend der Empfangswarnung aufzurufen.

3. System nach Anspruch 1, wobei der Empfangsmanager (22) ferner konfiguriert ist, um einen Status des Empfängers (20) und des Empfangskanals (21) zu prüfen und eine Empfangsstatuswarnung an den Empfänger (20) zu melden, wobei der Empfänger (20) die Sendedaten über den Sendekanal (11) basierend auf der Empfangsstatuswarnung erfasst.

4. Verfahren zum Remote-Direktspeicherzugriff basierend auf Spark-Shuffle, umfassend ein Sendeende und ein Empfangsende, wobei das Sendeende einen Sender (10), einen Sendekanal (11) und einen Sendemanager (12) umfasst, wobei das Empfangsende einen Empfänger (20), einen Empfangskanal (21) und einen Empfangsmanager (22) umfasst, wobei das Verfahren ferner umfasst:
Speichern von von dem Sender (10) erfassten Sendedaten in dem Sendekanal (11), Erzeugen von Prüfinformationen basierend auf den Sendedaten durch den Sendemanager (12) und Speichern der Prüfinformationen in dem Sendekanal (11), wobei die Prüfinformationen Datendetails und Zusammenfassungsinformationen einschließen;
Erfassen der Sendedaten und der Prüfinformationen durch den Empfänger (20) durch eine Remote-Direktspeicherzugriffstechnik, Speichern der Sendedaten und der Prüfinformationen in dem Empfangskanal (21) und Verifizieren der Sendedaten durch den Empfangsmanager (22) basierend auf den Prüfinformationen;
wobei das Verfahren ferner Folgendes umfasst: Prüfen, durch den Sendemanager (12), ob sich der Status des Senders (10) und des Sendekanals in einem Normalzustand befinden und um eine Sendestatuswarnung an den Sender (10) zu melden, wobei der Sender (10) die Sendedaten durch eine Sendeaufgabe basierend auf der Sendestatuswarnung erfasst;
wobei das Verfahren ferner das Vorverarbeiten der Sendedaten in einer Shuffle-Stufe des Spark Shuffle unter Verwendung eines ETL-Verarbeitungsmoduls umfasst;
Prüfen der Sendedaten durch den Empfangsmanager (22) basierend auf den Prüfinformationen, was ferner einschließt: Prüfen von Details der Sendedaten basierend auf den Datendetails, und Prüfen der Gesamtzahl der Sendedaten basierend auf den Zusammenfassungsinformationen;
wobei das Verfahren ferner umfasst: Senden eines Verifizierungsergebnisses durch den Empfangsmanager (22) an den Empfänger (20) nach dem Verifizieren der Sendedaten,
wobei das Verifizierungsergebnis einschließt, dass die Verifizierung bestanden ist oder die Verifizierung fehlgeschlagen ist; wenn das Verifizierungsergebnis ist, dass die Verifizierung fehlgeschlagen ist, Verwenden des Empfängers (20), um eine Sendefehlerwarnung an den Sender (10) zu senden.

5. Elektronische Vorrichtung (600), die einen Speicher (140), einen Prozessor (100) und ein in dem Speicher (140) gespeichertes und auf dem Prozessor (100) ausführbares Computerprogramm umfasst, wobei der Prozessor (100) bei der Ausführung des Programms die Schritte des Sendeendes des Verfahrens für den Remote-Direktspeicherzugriff basierend auf Spark Shuffle gemäß Anspruch 4 implementiert.

6. Computerlesbares Speichermedium, das ein Computerprogramm speichert, wobei das Computerprogramm, wenn es von einem Prozessor ausgeführt wird, die Schritte des Sendeendes des Verfahrens für den Remote-Direktspeicherzugriff basierend auf Spark-Shuffle nach Anspruch 4 implementiert.

## Revendications

1. Système permettant un accès direct à la mémoire à distance basé sur Spark Shuffle, dans lequel le système comprend une extrémité de transmission et une extrémité de réception ;
l'extrémité de transmission comprend un transmetteur (10), un canal de transmission (11) et un gestionnaire de transmission (12) ; le transmetteur (10) stocke des données de transmission acquises dans le canal de transmission (11), et invoque le gestionnaire de transmission (12) ; après avoir été invoqué, le gestionnaire de transmission (12) génère des informations de contrôle en fonction des données de transmission et stocke les informations de contrôle dans le canal de transmission (11), dans lequel les informations de contrôle comportent des détails de données et des informations résumées ;
l'extrémité de réception comprend un récepteur (20), un canal de réception (21) et un gestionnaire de réception (22) ; le récepteur (20) acquiert les données de transmission et les informations de contrôle dans le canal de transmission (11) par l'intermédiaire d'une technique d'accès direct à la mémoire à distance, stocke les données de transmission et les informations de contrôle dans le canal de réception (21), et invoque le gestionnaire de réception (22) ; après avoir été invoqué, le gestionnaire de réception (22) vérifie les données de transmission en fonction des informations de contrôle ;
dans lequel l'extrémité de transmission comprend en outre un registre (13) permettant d'enregistrer une tâche de transmission dans un format prenant en charge un accès direct à la mémoire à distance, dans lequel les données de transmission sont stockées dans la tâche de transmission ;
dans lequel le gestionnaire de transmission (12) est configuré en outre pour contrôler si l'état du transmetteur (10) et celui du canal de transmission (11) sont dans un état normal et pour envoyer en retour une alerte d'état de transmission au transmetteur (10), de sorte que le transmetteur (10) acquiert les données de transmission par l'intermédiaire de la tâche de transmission en fonction de l'alerte d'état de transmission ;
dans lequel le système comprend en outre un module de traitement etl permettant le prétraitement des données de transmission dans une étape de réorganisation du Spark Shuffle ;
après avoir été invoqué, le gestionnaire de réception (22) contrôle les données de transmission en fonction des informations de contrôle, ce qui comporte en outre : le gestionnaire de réception (22) contrôle des détails des données de transmission en fonction des détails de données, et contrôle le nombre total des données de transmission en fonction des informations résumées ;
dans lequel le gestionnaire de réception (22) est configuré en outre pour transmettre un résultat de vérification au récepteur (20) après avoir vérifié les données de transmission,
dans lequel le résultat de vérification comporte le fait que la vérification a réussi ou que la vérification a échoué ; lorsque le résultat de vérification est que la vérification a échoué, le récepteur (20) transmet une alerte d'échec de transmission au transmetteur (10).

2. Système selon la revendication 1, dans lequel l'extrémité de réception comprend en outre un dispositif d'écoute (23) permettant d'écouter le canal de réception (21), et de transmettre une alerte de réception au récepteur (20) lorsqu'il est écouté que les données de transmission entrent dans le canal de réception (21), pour amener le récepteur (20) à invoquer le gestionnaire de réception (22) conformément à l'alerte de réception.

3. Système selon la revendication 1, dans lequel le gestionnaire de réception (22) est configuré en outre pour contrôler un état du récepteur (20) et du canal de réception (21), et pour envoyer en retour une alerte d'état de réception au récepteur (20), le récepteur (20) acquiert les données de transmission par l'intermédiaire du canal de transmission (11) en fonction de l'alerte d'état de réception.

4. Procédé permettant un accès direct à la mémoire à distance basé sur Spark Shuffle, comprenant une extrémité de transmission et une extrémité de réception, dans lequel l'extrémité de transmission comprend un transmetteur (10), un canal de transmission (11) et un gestionnaire de transmission (12), dans lequel l'extrémité de réception comprend un récepteur (20), un canal de réception (21) et un gestionnaire de réception (22), dans lequel le procédé comprend en outre :
le stockage, dans le canal de transmission (11), de données de transmission acquises à partir du transmetteur (10), la génération, par le gestionnaire de transmission (12), d'informations de contrôle en fonction des données de transmission et le stockage dans le canal de transmission (11), des informations de contrôle, dans lequel les informations de contrôle comportent des détails de données et des informations résumées ;
l'acquisition, par le récepteur (20), des données de transmission et des informations de contrôle par l'intermédiaire d'une technique d'accès direct à la mémoire à distance, le stockage des données de transmission et des informations de contrôle dans le canal de réception (21) et la vérification, par le gestionnaire de réception (22), des données de transmission en fonction des informations de contrôle ;
dans lequel le procédé comprend en outre : le fait de contrôler, par le gestionnaire de transmission (12), si l'état du transmetteur (10) et celui du canal de transmission (11) sont dans un état normal et pour envoyer en retour une alerte d'état de transmission au transmetteur (10), le transmetteur (10) acquiert les données de transmission par l'intermédiaire d'une tâche de transmission en fonction de l'alerte d'état de transmission ;
dans lequel le procédé comprend en outre un prétraitement des données de transmission dans une étape de réorganisation du Spark Shuffle à l'aide d'un module de traitement etl ;
le contrôle, par le gestionnaire de réception (22), des données de transmission en fonction des informations de contrôle, ce qui comporte en outre : le contrôle de détails des données de transmission en fonction des détails de données, et le contrôle du nombre total des données de transmission en fonction des informations résumées ;
dans lequel le procédé comprend en outre : la transmission, par le gestionnaire de réception (22), d'un résultat de vérification au récepteur (20) après avoir vérifié les données de transmission,
dans lequel le résultat de vérification comporte le fait que la vérification a réussi ou que la vérification a échoué ; lorsque le résultat de vérification est que la vérification a échoué, l'utilisation du récepteur (20) pour transmettre une alerte d'échec de transmission au transmetteur (10).

5. Dispositif électronique (600), comprenant une mémoire (140), un processeur (100) et un programme d'ordinateur stocké dans la mémoire (140) et exécutable sur le processeur (100), le processeur (100), lors de l'exécution du programme, implémente les étapes de l'extrémité de transmission du procédé permettant un accès direct à la mémoire à distance basé sur Spark Shuffle selon la revendication 4.

6. Support de stockage lisible par ordinateur qui stocke un programme d'ordinateur, dans lequel lorsqu'il est exécuté par un processeur, le programme d'ordinateur implémente les étapes de l'extrémité de transmission du procédé permettant un accès direct à la mémoire à distance basé sur Spark Shuffle selon la revendication 4.
